## Europäisches Patentamt

(19) **European Patent Office**

**Office européen des brevets**

(11) Veröffentlichungsnummer: **0 142 560**
**B1**

(12) **EUROPÄISCHE PATENTSCHRIFT**

(45) Veröffentlichungstag der Patentschrift:
**26.08.87**

(51) Int. Cl.⁴: **G 01 L 9/00**

(21) Anmeldenummer: **84902503.6**

(22) Anmeldetag: **16.05.84**

(86) Internationale Anmeldenummer:
**PCT/DE 84/00109**

(87) Internationale Veröffentlichungsnummer:
**WO 84/04590 (22.11.84** Gazette 84/27)

(54) ZYLINDRISCHER HOHLKÖRPER FÜR MESSWANDLER ZUM MESSEN DES DRUCKES EINES FLUIDS.

(30) Priorität: **16.05.83 DE 3317706**

(43) Veröffentlichungstag der Anmeldung:
**29.05.85 Patentblatt 85/22**

(45) Bekanntmachung des Hinweises auf die Patenterteilung:
**26.08.87 Patentblatt 87/35**

(84) Benannte Vertragsstaaten:
**AT BE CH DE FR GB LI LU NL SE**

(56) Entgegenhaltungen:
**FR - A - 2 312 771**
**US - A - 3 874 221**

(73) Patentinhaber: **FIRMA NORD MICRO ELEKTRONIK FEINMECHANIK AG, Viktor-Slotosch-Strasse 20, D-6000 Frankfurt/Main 60 (DE)**

(72) Erfinder: **WALDMANN, Dieter, Assenheimer Strasse 12, D-6367 Karben 1 (DE)**

(74) Vertreter: **Seibert, Rudolf, Dipl.-Ing., Tattenbachstrasse 9, D-8000 München 22 (DE)**

**Beschreibung**

Die vorliegende Erfindung bezieht sich auf einen zylindrischen Hohlkörper, wie er in Messwandler zum Messen des Druckes eines Fluids, insbesondere eines Gases, benötigt wird.

Insbesondere zum Messen des Luftdruckes sind Messwandler bekannt geworden, die zum Messen des Druckes oder einer Druckdifferenz von Fluiden, also insbesondere auch des Luftdruckes, einen zylindrischen Hohlkörper mit einer verhältnismässig elastischen zu Resonanzschwingungen fähigen zylindrischen Wand verwenden, wobei der Innenraum des zylindrischen Hohlkörpers gegen den Umgebungsraum abgedichtet ist und dem einen dieser Räume, insbesondere dem Innenraum, das hinsichtlich des Druckes zu messende Fluid zugeführt wird, während der andere Raum, also insbesondere der Umgebungsraum, auf einem definierten Vergleichsdruck, z.B. dem Druck Null, gehalten ist. Der zylindrische Hohlkörper wird dabei mindestens einseitig eingespannt und mit Hilfe eines elektromagnetischen Systems zu Resonanzschwingungen angeregt. Die abhängig von der Druckdifferenz zwischen Innenraum und Aussenraum auftretenden Resonanzschwingungen werden abgegriffen und die abhängig von der Druckdifferenz variierende Frequenz der Schwingungen für die Messung des Druckes ausgewertet.

Ein derartiger Messwandler ist u.a. in der DE-PS 1 943 925 beschrieben.

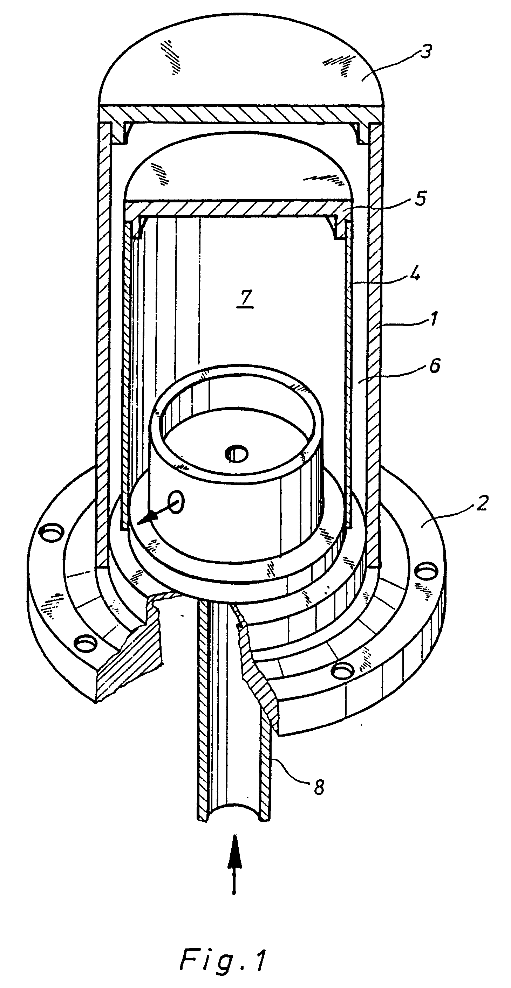

Zum besseren Verständnis der später erläuterten Erfindung an einem zylindrischen Hohlkörper für die genannten Zwecke wird anhand der Fig. 1 der anliegenden Zeichnung zunächst der Aufbau eines derartigen Messwandlers beschrieben.

Die Fig. 1 zeigt in einer perspektivischen Ansicht teilweise aufgeschnitten den konstruktiven Aufbau eines derartigen Messwandlers, allerdings ohne die für die Schwingungsanregung und die Schwingungsabnahme notwendigen elektrischen und magnetischen Teile.

Der in Fig. schematisch dargestellte Messwandler besteht zunächst aus einem Gehäuse 1, das luftdicht auf einem Sockel 2 aufgesetzt ist und an der Oberseite ebenfalls luftdicht durch einen Deckel 3 abgeschlossen ist.

Im Inneren des Gehäuses 1 ist ein Hohlzylinder 4 aus ferromagnetischem Material vorgesehen, dessen Wandstärke so gewählt ist, dass die Wand längs des Umfanges zu Resonanzschwingungen fähig ist. Auch der Messzylinder 4 ist luftdicht abgeschlossen auf dem Sockel 2 befestigt und mit einem ebenfalls luftdicht aufgesetzten Deckel 5 versehen.

In dem Ringraum 6 zwischen Gehäuse 1 und Messzylinder 4 ist ein definierter Differenzdruck, beispielsweise auch der Druck «0» (Vakuum). Der Innenraum 7 des Hohlzylinders steht über Öffnungen und die Zuführleitung 8 mit dem Raum in Verbindung, in welchem sich das Fluid befindet, dessen Druck gemessen werden soll.

Für die Messung selbst wird durch ein nicht dargestelltes elektromagnetisches System die Wandung des Messzylinders 4 zu Resonanzschwingungen angeregt und über ein Abnahmesystem wird die Frequenz der Schwingungen gemessen. Diese Eigenfrequenz ist abhängig von der Druckdifferenz zwischen dem Innenraum 7 und dem Ringraum 6 und kann dementsprechend zur Anzeige des Druckes ausgewertet werden.

Ein Messwandler mit einem Aufbau, wie vorstehend beschrieben, kann unmittelbar auch zur Messung der Dichte eines Fluids verwendet werden, da das Schwingungsverhalten des zylindrischen Hohlkörpers sowohl hinsichtlich der Radialschwingungen als auch Längsschwingungen auch von der Dichte des mit der Wandung des Zylinders mitschwingenden Mediums abhängig ist. Da andererseits die Masse eines strömenden Mediums wiederum abhängig von seiner Temperatur ist, bedeutet dies, dass das Schwingungsverhalten eines Messwandlers, wie vorstehend beschrieben, nicht nur von dem zu messenden Druck, sondern auch über die sich ändernde Masse des strömenden Mediums abhängig von seiner Temperatur ist. Mit anderen Worten bedeutet dies, dass eine präzise Druckmessung mit einem Messwandler vorstehenden Ausbaus dann und nur dann möglich ist, wenn das hinsichtlich seines Druckes zu messende Fluid jeweils mit gleicher Zusammensetzung und gleicher Temperatur dem Innenraum des Messzylinders zugeführt wird.

In der Praxis, insbesondere bei Verwendung eines Messwandlers vorgenannten Aufbaus zur Höhenmessung in Flugzeugen und dergleichen besteht aber keine Möglichkeit, die Temperatur konstant zu halten.

Der Einfluss der Messenänderung des hinsichtlich des Druckes zu messenden Fluids wird dabei umso geringer, je fester die Wandung des zylindrischen Hohlkörpers ausgebildet wird, da der Einfluss der mitschwingenden Masse des Fluids, dessen Druck gemessen werden soll, auf das Schwingungsverhalten der Wandung des Zylinders selbst abnimmt.

Einer Realisierung dieser Forderung, die Wandstärke zu verstärken, die im übrigen der Forderung, die Wandstärke im Interesse ausgeprägter Schwingungsformen möglichst dünn zu machen, entgegen läuft, sind von vorneherein Grenzen gesetzt, nämlich da, wo keine ausgeprägten Schwingungsformen bei der jeweiligen Baugrösse erreicht werden können.

Demgemäss ist es Aufgabe der Erfindung einen zylindrischen Hohlkörper zur Verwendung in Messwandlern vorgenannter Art anzugeben, bei welchem die durch die Anregung ausgelösten Schwingungsformen gut ausgeprägt sind und andererseits der Einfluss der Dichte des hinsichtlich des Druckes zu messenden Mediums (Gases) möglichst gering gehalten ist.

Diese Aufgabe wird mit einem zylindrischen Hohlkörper mit den Merkmalen des Patentanspruches 1 gelöst.

Vorteilhafte Realisierungsmöglichkeiten und Weiterbildungen an einen zylindrischen Hohlkörper zur Verwendung in Messwandlern zum Messen des Druckes ergeben sich aus den abhängigen Ansprüchen.

In Anspruch 7 ist ein Herstellungsverfahren angegeben. Bei einem zylindrischen Hohlkörper nach der Erfindung wird also die Zylinderwand über den Umfang verteilt mit unterschiedlicher Masse derart versehen, dass im Bereich von Schwingungsbäuchen eine erhöhte Masse gegeben ist. Dadurch entstehen zwischen den Bereichen des Auftretens von Schwingungsbäuchen, also in den Bereichen wo sich die Schwingungsknoten ausbilden, weiche Gelenkstellen.

Dabei ergeben sich bei einer gegebenen Anregung der Zylinderwand mit Rücksicht auf die im Bereich der Schwingungsknoten geringe Wandstärke, die weiche Gelenkstellen bilden, relativ grosse Amplituden im Bereich der die Schwingungsbäuche ausführenden verstärkten Wandabschnitte, wobei die schwingende Masse im Vergleich zu herkömmlichen zylindrischen Hohlkörpern sehr viel grösser gehalten ist, so dass der Einfluss der Dichte des zu messenden Mediums (Gases) und damit dessen Temperatur wesentlich verringert wird.

Berechnungen haben gezeigt, dass durch derartige Massnahmen, deren konstruktive Realisierungsmöglichkeiten im folgenden noch erläutert werden, eine Empfindlichkeitssteigerung um den Faktor 10 erreicht wird.

Anhand der Fig. 2 bis 9 der anliegenden Zeichnung soll dabei das Prinzip des Schwingungsverhaltens eines zylindrischen Hohlkörpers nach der Erfindung näher erläutert werden. In der Zeichnung zeigen:

Fig. 2 schematisch einen Querschnitt eines Messzylinders herkömmlicher Bauart,

Fig. 3 einen Messzylinder mit einer Masse-(Wand)-verstärkung entsprechend dem Vorschlag nach der Erfindung zur Erzeugung von Radialschwingungen mit je 2 Schwingungsbäuchen.

Fig. 4 eine Zylinderwandausbildung entsprechend einem Aufbau nach Fig. 3, mit nach innen verlegter Massverstärkung,

Fig. 5 ein Schwingungsdiagramm eines Hohlzylinders,

Fig. 6 einen entsprechenden Aufbau für ein Schwingungsverhalten mit einem Schwingungsmode m = 3,

Fig. 7 einen entsprechenden Aufbau für ein Schwingungsmode m = 4,

Fig. 8 eine konstruktive Realisierungsmöglichkeit eines zylindrischen Hohlkörpers für einen Schwingungszylinder mit einem Schwingungsmode m = 3 und

Fig. 9 den entsprechenden Aufbau für einen Schwingungsmode m = 4.

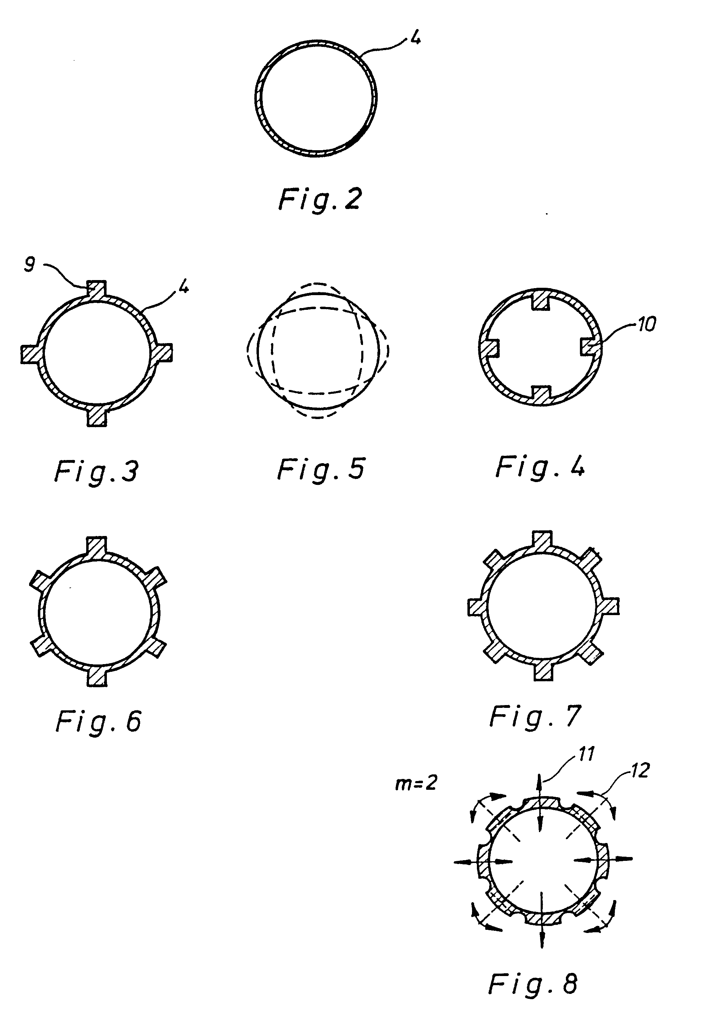

Die Fig. 2 zeigt im Querschnitt die Ausbindung der Wandung eines zylindrischen Hohlkörpers, wie er bislang verwendet wurde. Hierbei ist die Wandung des Zylinders 4 über den gesamten Umfang gleich stark gehalten. Dementsprechend kann ein Zylinder mit einem derartigen Aufbau auch je nach seiner Eigenfrequenz unter Anregung mit verschiedenen Schwingungsmoden m = 2, d.h. mit in den beiden eingezeichneten Flächenkoordinaten verlaufenden Schwingungsbäuchen, mit m = 3, d.h. um 120 Grad versetzte Schwingungsbäuchen, mit m = 4 usw. schwingen.

In Fig. 3 ist schematisch der Querschnitt eines Messzylinders für die Zwecke der Erfindung dargestellt. Auf der Zylinderwand 4 sind in den Bereichen, in denen Schwingungsbäuche angeregt werden und auftreten sollen, sich vorzugsweise linienförmig erstreckende Zusatzmassen 9 vorgesehen, die die schwingende Masse als solche erhöhen, während zwischen den Massen die Zylinderwandung mindestens ebenso dünn, wie herkömmlich, gehalten ist.

Die Fig. 4 zeigt anschaulich, dass im Rahmen der Erfindung die Zusatzmassen auch in dem Zylinder in Form von sich ebenfalls über die Länge erstreckenden Stegen 10 vorgesehen sein können.

Es sei an dieser Stelle angemerkt, dass selbstverständlich auch eine zusätzliche Massenbelegung aussen und innen denkbar ist, wobei die Ausbildung der Stege 9 bzw. 10 hinsichtlich ihrer Höhe aber auch ihrer Breite durch die Geometrie des Körpers selbst bestimmt ist.

In Fig. 5 ist anschaulich das Schwingungsverhalten eines zylindrischen Hohlkörpers mit einer Querschnittsform nach den Fig. 3 und/oder 4 gezeigt. Ein derartiger zylindrischer Hohlkörper würde bei Erregung mit einem Schwingungsmode m = 2 schwingen, wobei sich in der senkrechten und waagrechten Richtung in der Zeichnungsebene gesehen Schwingungsbäuche und dazwischen, also im Bereich der dünnen Zylinderwandung Schwingungsknoten ausbilden.

Die Fig. 6 zeigt schematisch und anschaulich, wie ein zylindrischer Hohlkörper nach der Erfindung aufzubauen wäre, wenn ein Schwingungsmode m = 3 angeregt werden soll. In diesem Fall werden die Bereiche erörter Masse auf dem Umfang mit einem Abstand von 60 Grad verteilt, und die Anregung erfolgt derart, dass jeweils die um 120 Grad versetzten Massen in der anderen Richtung angeregt werden, so dass insgesamt 6, nämlich gleichzeitig 3 nach aussen gerichtete und 3 nach innen gerichtete Schwingungsbäuche auftreten, während sich zwischen den einzelnen Massen die Schwingungsknoten mit wegen der dünnen Wandstärke in diesen Bereichen geringer innerer Reibung ausbilden.

Die Fig. 7 zeigt eine Ausführungsform, die in Weiterbildung zu einem Schwingungsmode m = 4 geeignet ist. Die Wirkungsweise dieser Anordnung ergibt sich unmittelbar aus vorstehenden Ausführungen.

Gemäss einer vorteilhaften Weiterbildung des Erfindungsgedankens empfiehlt sich die zur Erhöhung der Masse vorzusehenden Stege sehr viel breiter und die dünne Zylinderwand in den Knotenbereichen schmäler zu halten, als zunächst zur schematischen Erläuterung anhand der Fig. 3, 4, 6 und 7 gezeigt.

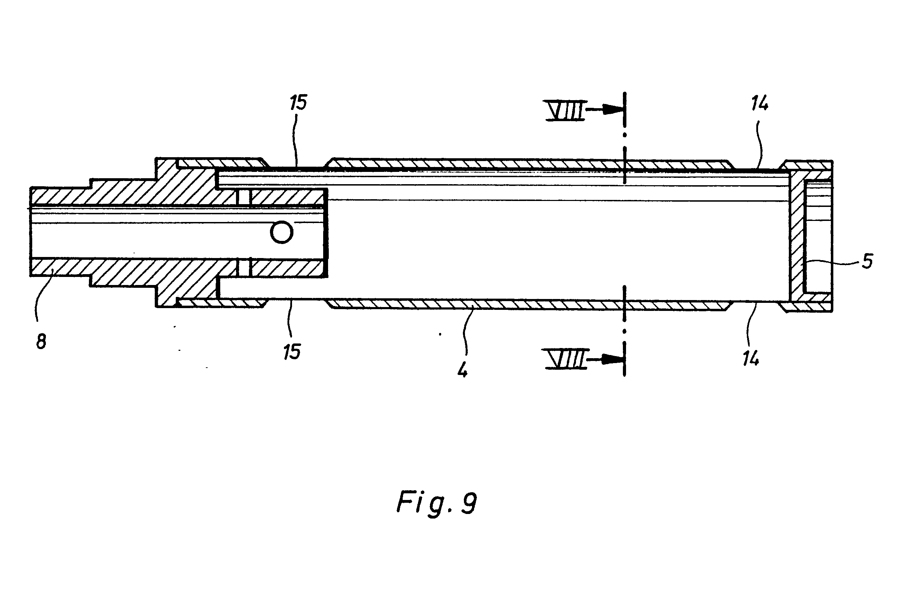

In der Praxis empfiehlt sich vielmehr, der Zylinderwand im wesentlichen eine Form zu geben, wie dies in Fig. 8 für einen Schwingungsmode m = 3 und in Fig. 9 für einen Schwingungsmode m = 2 oder m = 4 dargestellt ist. Bei diesen Ausführungsformen werden die Bereiche, in denen sich Schwingungsknoten bilden sollen, nutenförmig geschwächt, während die übrige Zylinderwand, die die Schwingungen ausführt, im wesentlichen über einen Grossteil des Bereiches zwischen zwei Schwingungsknoten mit erhöhter Masse versehen ist. Dadurch gelingt es dann, den Bereich der Schwingungsknoten besonders dünn zu gestalten und damit besonders weiche Gelenkstellen zwischen den schwingenden Massen zu erhalten.

Die Ausnehmungen im Bereich der Schwingungsknoten werden dabei so geformt, dass die Oberfläche der Ausnehmung zumindest beim Übergang in die

5      **0 142 560**      6

geringste Wandstärke einer stetigen Kurve folgt, um an der so gebildeten Gelenkstelle für die schwingenden Massen keine Sprungstellen zu bekommen. Hierzu empfiehlt es sich, den Querschnitt der an diesen Stellen anzubringenden Nuten bogenförmig, z.B. halbkreisförmig zu bilden.

Derartige besonders vorteilhafte Ausgestaltungen eines zylindrischen Hohlkörpers nach der Erfindung können in der Praxis dadurch einfach und präzise hergestellt werden, dass zunächst ein Zylinder mit dickerem Wandquerschnitt hergestellt und im Bereich der Schwingungsknoten die Wandstärke, z.B. spanlos, abgetragen wird.

Es sei aber ausdrücklich darauf hingewiesen, dass sowohl für das Aufbringen der zusätzlichen Masse oder das Abtragen von zunächst vorhandener Masse alle Fertigungsmöglichkeiten einsetzbar sind.

Es ist lediglich darauf zu achten, dass im Bereich der Schwingungsknoten die dort auftretenden Kräfte nicht zu mechanischen Beschädigungen führen. Hierzu besteht dann die Gefahr, wenn an diesen Stellen Schweiss- oder Klebeverbindungen oder Bearbeitungskanten vorgesehen sind.

Die Bereiche erhöhter Masse sollen sich gem. dem Vorschlag nach der Erfingung der Länge nach zumindest über den Bereich erstrecken, in dem Schwingungsanregung und die Schwingungsabnahme durchgeführt wird.

Es ist aber im Rahmen der Erfindung besonders vorteilhaft, diese Bereiche als durchgehende Stege über die ganze Länge vorzusehen, wobei es sich als zweckmässig erwiesen hat, unmittelbar vor den sich in der Längsrichtung ausbildenden Schwingungsknoten an beiden Enden, das ist einmal an der Einspannstelle am Träger 2 (Fig. 1) und einmal im Bereich des Abschlussdeckels 5 (Fig. 1) der geringeren Querschnitt gleichmässig über den ganzen Umfang vorhanden ist, um an der Einspannstelle selbst den gleichen Effekt, wie hinsichtlich der Radialschwingungen zu erreichen, nämlich dass in unmittelbarer Nachbarschaft bzw. an den Schwingungsbäuchen selbst nur eine geringe Wandstärke gegeben ist.

Dies sei anhand der Fig. 9 näher erläutert:

Die Fig. 9 zeigt im Schnitt den zylindrischen Hohlkörper 4 für ein Druckmessgerät nur mit den in Verbindung für die Erläuterung der vorliegenden Erfindung interessierenden Teilen. Dabei soll der Zylinder 4, eine Querschnittsform, wie in Fig. 8 gezeigt, aufweisen. Demensprechend ist in Fig. 9 die Linie VIII-VIII eingezeichnet. Im übrigen entsprechen die Bezugszeichen denen in Fig. 1 und bezeichnen entsprechende Teile.

Aus der Fig. 9 ist zu ersehen, dass die Bereiche erhöhter Masse in unmittelbarer Nähe des Deckels 5 bzw. der Einspannung an der Zuführleitung 8 nämlich am nicht dargestellten Sockel 2 (Fig. 1), also in den Bereichen 14 und 15 über den gesamten Umfang abgetragen sind, so dass in diesen Bereichen ein gleichmässiger Wandquerschnitt über den ganzen Umfang gegeben ist. Hierdurch wird auch die Ausbildung der Längsschwingungen im Sinne der Erfindung weniger temperaturabhängig und der Übergang des schwingenden Bereiches zum Einspannbereich ist entsprechend weich und elastisch gehalten.

Die vorliegende Erfindung wurde anhand von schematisch gehaltenen Ausführungsbeispielen erläutert. Für den auf dem Sachgebiet tätigen Fachmann ist ersichtlich, dass weitere Abwandlungsmöglichkeiten im Rahmen der Erfinung durchaus möglich sind. So ist es beispielsweise dann vorteilhaft, die der Länge nach verlaufenden Bereiche erhöhter Masse über die Länge gesehen mehrmals durch Abtragen zu unterbrechen, wenn über die Länge eine Mehrzahl von Schwingungsbäuchen, also beispielsweise n = 2 oder mehr deutlich ausgeprägt werden sollen. Diese über den Umfang verlaufenden einheitlichen Querschnitte sind dann dort anzuordnen, wo in Längsrichtung gesehen ein Schwingungsknoten ausgeprägt werden soll.

Wie schon angedeutet, kann ein zylindrischer Hohlkörper für die Zwecke nach der Erfindung auf die verschiedenste Weise, also sowohl durch Abtragen der schwächeren Stellen im Bereich der Schwingungsknoten als durch nachträgliches Auftragen der Bereiche erhöhter Masse (chemisch, elektrochemisch, mechanisch, magnetisch) hergestellt werden.

## Patentansprüche

1. Zur Verwendung im Messwandler zum Messen des Druckes eines Fluids, insbesondere Gases, bestimmter zylindrischer Hohlkörper aus elastischem Material, dessen Innenraum gegen den Umgebungsraum abgedichtet ist, wobei einem dieser Räume, insbesondere dem Innenraum, das hinsichtlich des Druckes zu messende Fluid zugeführt wird, während der andere Raum, insbesondere der Umgebungsraum, auf einem definierten Vergleichsdruck, z.B. dem Druck Null, gehalten ist, und der mindestens einseitig eingespannt ist, und wobei der Hohlzylinder zu Resonanzschwingungen angeregt und die Frequenz der so erregten Schwingungen als Mass für die Druckdifferenz der beiden Räume abnehmbar ist, dadurch gekennzeichnet, dass die Zylinderwand (4), über den Umfang verteilt, mit unterschiedlicher Masse (9) derart versehen ist, dass im Bereich von Schwingungsbäuchen eine erhöhte Masse gegeben ist.

2. Zylindrischer Hohlkörper nach Anspruch 1, dadurch gekennzeichnet, dass die Zylinderwand im Bereich von Schwingungsbäuchen verstärkt ist.

3. Zylindrischer Hohlkörper nach den Ansprüchen 1 oder 2, dadurch gekennzeichnet, dass die Zylinderwand über dem Umfang gesehen in viermal soviel gleichmässig verteilten Bereichen verstärkt ist, als die Ordnungszahl des für Radialschwingungen gewählten Schwingungsmode beträgt.

4. Zylindrischer Hohlkörper nach Anspruch 3, dadurch gekennzeichnet, dass die Zylinderwand achsparallel streifenförmig verstärkt ist.

5. Zylindrischer Hohlkörper nach Anspruch 4, dadurch gekennzeichnet, dass die streifenförmigen Verstärkungen in der Nähe der Einspannstelle bzw. Einspannstellen abgetragen sind.

6. Zylindrischer Hohlkörper nach einem der vorhergehenden Ansprüche, dadurch gekennzeichnet, dass der Übergang vom geringsten Querschnitt zu verstärktem Querschnitt stetig verlaufend gewählt ist.

4

7. Verfahren zum Herstellen eines zur Verwendung in einem Messwandler bestimmten zylindrischen Hohlkörpers, gemäss einem der Ansprüche 1 bis 6, bei dem die Zylinderwand, über den Umfang verteilt, mit unterschiedlicher Masse derart versehen ist, dass im Bereich der Schwingungsbäuche eine erhöhte Masse gegeben ist, dadurch gekennzeichnet, dass zunächst ein Zylinder mit einem dem Bereich erhöhter Masse entsprechenden einheitlichen Wandquerschnitt hergestellt wird und die Bereiche verminderter Masse durch eine, vorzugsweise spanlose Bearbeitung abgetragen werden.

**Claims**

1. A cylindrical hollow body of elastic material intended for use in a measuring transducer for measuring the pressure of a fluid, in particular a gas, the inner chamber being sealed from the surrounding chamber, one of these chambers, in particular the inner chamber, being supplied with the fluid whose pressure is to be measured, whereas the other chamber, in particular the surrounding chamber, being clamped at least on one side, and maintained at a determinate comparative pressure, e.g. the pressure zero, the hollow cylinder being excited to execute resonant oscillations and the frequency of the oscillations excited in this way serving as a gauge of the pressure difference between the two chambers, characterised in that the cylindrical wall (4) is provided with different masses (9) so distributed over its periphery that an increased mass exists in the region of oscillation antinodes.

2. A cylindrical hollow body as claimed in Claim 1, characterised in that the cylindrical wall is reinforced in the region of oscillation antinodes.

3. A cylindrical hollow body as claimed in Claims 1 or 2, characterised in that, considered over its periphery, the cylindrical wall is reinforced in four times as many uniformly distributed zones as the ordinal number of the oscillation mode selected for radial oscillations.

4. A cylindrical hollow body as claimed in Claim 3, characterised in that the cylindrical wall is provided with axially-parallel strip-like reinforcements.

5. A cylindrical hollow body as claimed in Claim 4, characterised in that the strip-like reinforcements are diminished in the vicinity of the clamping point or points.

6. A cylindrical hollow body as claimed in one of the preceding Claims characterised in that the transition from the smallest cross-section to the reinforced cross-section is selected to be constant.

**Revendications**

1. Corps creux cylindrique en matière élastique destiné à être utilisé dans un transducteur de mesure pour mesurer la pression d'un fluide, notamment d'un gaz, dont la chambre intérieure est rendue étanche vis-à-vis de la chambre environnante, du fluide dont on doit mesurer la pression étant envoyé à l'une de ces chambres, notamment à la chambre intérieure, tandis que l'autre chambre, notamment la chambre environnante, est maintenue à une pression de comparaison définie par exemple à la pression nulle, et qui est encastrée au moins d'un côté, le cylindre creux étant excité à des oscillations de résonance et la fréquence des oscillations ainsi excitées pouvant être prise comme mesure de la différence de pression entre les deux chambres, caractérisée en ce que la paroi du cylindre (4) possède avec répartition périphérique une masse (9) différente, de manière qu'il en résulte une masse plus grande dans la région des ventres d'oscillation.

2. Corps creux cylindrique suivant la revendication 1, caractérisé en ce que la paroi du cylindre est renforcée dans la région des ventres d'oscillation.

3. Corps creux cylindrique suivant la revendication 1 ou 2, caractérisé en ce que la paroi du cylindre, quand on la considère sur le pourtour, est renforcée en un nombre de régions réparties d'une manière uniforme, qui est égal au quadruple du numéro d'ordre du mode d'oscillation choisi pour les oscillations radiales.

4. Corps creux cylindrique suivant la revendication 3, caractérisé en ce que la paroi du cylindre est renforcée sous forme de bandes parallèles à l'axe.

5. Corps creux cylindrique suivant la revendication 4, caractérisé en ce que les renforcements en forme de bandes sont enlevés au voisinage de l'emplacement d'encastrement ou des emplacements d'encastrement.

6. Corps creux cylindrique suivant l'une des revendications précédentes, caractérisé en ce que le passage de la section transversale la plus petite à la section transversale la plus renforcée s'effectue d'une manière uniforme.

*Fig.1*

Fig. 2

Fig. 3

Fig. 5

Fig. 4

Fig. 6

Fig. 7

Fig. 8

Fig. 9

0 142 560